# EUROPEAN PATENT APPLICATION

(11) **EP 4 817 712 A1**
(43) Date of publication of application: **07.10.2026**
(21) Application number: 26168655.4
(22) Date of filing: 27.03.2026
(51) Int. Cl.: A63F 13/355, A63F 13/86

(54) **INFORMATION PROCESSING APPARATUS, COMPUTER-IMPLEMENTED METHOD, AND COMPUTER PROGRAM**

(30) Priority: 31.03.2025 JP 2025059836
(71) Applicant: Nintendo Co., Ltd., Kyoto-shi, Kyoto 601-8501 (JP)
(72) Inventor: OIWA, Ryota, Kyoto, 601-8501 (JP); ONO, Sumikazu, Kyoto, 601-8501 (JP); ASHIDA, Jun, Kyoto, 601-8501 (JP); ENDO, Hiroya, Kyoto, 601-8501 (JP)
(74) Representative: Lorenz Seidler Gossel Part. mbB

(57) **Abstract**

An information processing apparatus (100) comprises one or more processors (102) and one or more memories storing instructions that cause the one or more processors to perform operations comprising: joining a session in which one or more distribution images based on an image of a running game application can be distributed; displaying a session image comprising at least one of the one or more distribution images distributed in the session, wherein one or more of the distribution images included in the session image are displayed in at least one of a first state and a second state, respectively; and displaying a first image comprising at least an image indicating a further information processing apparatus displaying, in the second state, at least one of the distribution images distributed by another information processing apparatus joining the session.

## Description

The present disclosure relates to an information processing apparatus, a computer-implemented method, and a computer program.

### INTRODUCTION

A chat system using information communication is publicly known.

There is room for improvement regarding online communication among a plurality of users.

### SUMMARY

(Configuration 1) An information processing apparatus comprising at least one processor, the at least one processor configured to: join a session in which a plurality of distribution images based on an image of a running game application are capable of being distributed; cause a display to display a session image comprising at least one of the plurality of the distribution images distributed in the session, wherein one or more of the distribution images included in the session image are respectively displayed in a first state, a second state, or both; and cause the display to display a first image comprising at least an image indicating a further information processing apparatus displaying, in the second state, at least one distribution image distributed by another information processing apparatus participating in the session.

(Configuration 2) In Configuration 1, the first image is one or more images respectively displayed in a vicinity of any of the one or more distribution images included in the session image; and the first image indicates the further information processing apparatus displaying the distribution image in the vicinity of the first image in the second state.

(Configuration 3) In Configuration 1 or 2, the session image comprises one or more second images respectively generated at predetermined positions; each of the second images is associated with an information processing apparatus participating in the session; and each of the second images comprises an image indicating another information processing apparatus distributing the distribution image, at least when the associated information processing apparatus is displaying any of the distribution images in the second state.

(Configuration 4) In Configuration 3, the second image comprises the distribution image when the associated other information processing apparatus is distributing the distribution image in the session.

(Configuration 5) In Configuration 1 or 2, the second state is a state in which visibility of the distribution image is higher than in the first state.

(Configuration 6) In Configuration 5, the state in which the visibility is higher comprises at least one of: a state of being displayed larger, a state of having a higher resolution, a state of having a higher frame rate, and a state of having a higher bit rate, than in the first state.

(Configuration 7) In Configuration 1 or 2, the second state is a state in which sound quality of sound accompanying reproduction of the distribution image is higher than in the first state.

(Configuration 8) In Configuration 1 or 2, the number of the distribution images displayed in the second state and included in the session image is zero or one.

(Configuration 9) In Configuration 1 or 2, the session image comprises all of the distribution images distributed in the session.

(Configuration 10) In Configuration 1, 2, or 9, the first image comprises at least an image indicating all information processing apparatuses participating in the session that are displaying at least any of the distribution images in the second state.

(Configuration 11) A computer-implemented method comprising: joining a session in which a plurality of distribution images based on an image of a running game application are capable of being distributed; displaying a session image comprising at least one of the plurality of distribution images which are distributed in the session and are displayed in a first state, a second state, or both; and displaying a first image comprising at least an image indicating a further information processing apparatus displaying, in the second state, at least one of the distribution images distributed by another information processing apparatus participating in the session.

(Configuration 12) A computer program comprising instructions which, when the program is executed by a computer, cause the computer to carry out the method of Configuration 11.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 shows an exemplary illustrative non-limiting drawing of a configuration example of a system according to the present embodiment.
FIG. 2 shows an exemplary illustrative non-limiting drawing of a hardware configuration example of a game apparatus according to the present embodiment.
FIG. 3 shows an exemplary illustrative non-limiting drawing of a hardware configuration example of a server according to the present embodiment.
FIG. 4 shows an exemplary illustrative non-limiting drawing of a software configuration example of the game apparatus according to the present embodiment.
FIG. 5 shows an exemplary illustrative non-limiting drawing for describing an example of a display image generated in the game apparatus according to the present embodiment.
FIG. 6 shows an exemplary illustrative non-limiting drawing for describing an example of a display image generated in the game apparatus according to the present embodiment.
FIG. 7 shows an exemplary illustrative non-limiting drawing for describing an example of a display image generated in the game apparatus according to the present embodiment.
FIG. 8 shows an exemplary illustrative non-limiting drawing for describing an example of a display image generated in the game apparatus according to the present embodiment.
FIG. 9 shows an exemplary illustrative non-limiting drawing of a sequence diagram for describing an example of a process according to the present embodiment.
FIG. 10 shows an exemplary illustrative non-limiting drawing for describing an example of a display image generated in the game apparatus according to the present embodiment.

### DETAILED DESCRIPTION OF NON-LIMITING EXAMPLE EMBODIMENTS

The present embodiment will be described in detail with reference to the drawings. The same or corresponding elements in the drawings have the same reference characters allotted and description thereof will not be repeated.

Even when data is described using the same term, contents of the data do not need to completely match. At least, when a certain data and another data both transmit specific information, they may be regarded as the same data. Also, a name attached to data is for convenience, and does not limit a range or a technical meaning indicated by the data.

A program causing a computer to execute a process may be a single program, or may be a program group including a plurality of programs. In the present disclosure, "a program" does not necessarily mean a single program, and may include a program group. Also, "a program" does not need to be entirely stored in one apparatus. "A program" may mean, for example, a whole of a plurality of programs respectively stored in a plurality of apparatuses included in a computer.

### [A. System Configuration Example]

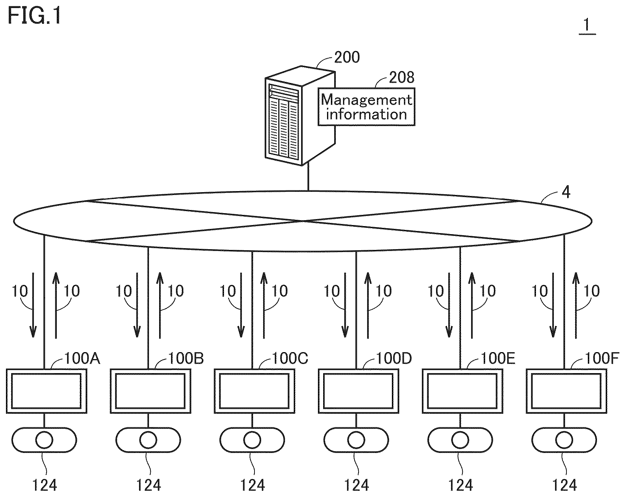

First, a configuration example of a system according to the present embodiment will be described. FIG. 1 is a schematic diagram showing a configuration example of an information processing system 1 according to the present embodiment. The information processing system 1 includes one or a plurality of game apparatuses 100. FIG. 1 shows a configuration example of the system 1 including six game apparatuses 100 connected to a network 4. In the following description, when it is necessary to specify each of the plurality of game apparatuses 100, alphabets are attached to distinguish them (for example, 100A, 100B, 100C, 100D, 100E, 100F shown in FIG. 1).

In the system 1 according to the present embodiment, a user using the game apparatus 100 has an own account, and the own account is associated with each game apparatus 100. The user having the account can cause the associated account to participate in one or a plurality of sessions by performing a specified input to the game apparatus 100. The game apparatus 100 corresponding to the account participating in any of the sessions transmits data used for communication among users (hereinafter sometimes referred to as "communication data 10") to another game apparatus 100 corresponding to another account participating in the session. In the present embodiment, "communication" may mean transmitting at least any of an image (for example, may include a game image, a camera image, and a text image) and a sound that may include a voice to the another game apparatus 100. For example, unilaterally transmitting only a game image of a game application executed by one game apparatus 100 from the one game apparatus 100 to the other game apparatus 100 may also be included in "communication". Note that the account does not have to be associated with each game apparatus 100. "Account" and "game apparatus" may be read interchangeably.

The communication data 10 may include, for example, sound data acquired by the game apparatus 100, image data acquired by the game apparatus 100, text data acquired by the game apparatus 100, information regarding an application being executed in the game apparatus 100, etc. Also, the communication data 10 may include management information 208 to be described later. Note that one communication data 10 does not necessarily include all data, and one data may be divided into a plurality of the communication data 10. One communication data 10 may include a plurality of data.

An "image" in the present specification includes a moving image and one or a plurality of still images. The image may be an image captured using a camera 124 etc. available in the game apparatus 100, or may be an image of an application being executed in the game apparatus 100. An "image" in the present specification includes data used for generation or output of the image. Also, similarly, a "sound" and a "text" in the present specification also include data used for their generation or output.

The system 1 may further include a management server 200. The management server 200 is in charge of a process of newly configuring a session, a process for one or a plurality of game apparatuses to participate in a session, a process of relaying the communication data 10 transmitted and received by one or a plurality of game apparatuses 100, etc. The management server 200 has the management information 208 for managing a configured session, one or a plurality of accounts belonging to each session, etc. The management information 208 may be generated in the management server 200. Also, it may be generated based on the communication data 10 transmitted by one or a plurality of game apparatuses 100. The information processing system 1 may include a plurality of the management servers 200. When the information processing system 1 includes the plurality of management servers 200, a part and another part of a process for realizing a specific function handled by the management server may be respectively executed by different management servers 200. The management server 200 may be a virtual server. Hereinafter, a "server" may mean the management server 200, or may mean another server.

A method in which a certain game apparatus 100 transmits the communication data 10 to one or a plurality of other game apparatuses 100 may be a method of directly transmitting the communication data 10 to one or a plurality of game apparatuses 100 in addition to or instead of a method via one or a plurality of relay entities (for example, the management server 200). As an example of the method of directly transmitting the communication data 10, for example, a P2P method can be cited.

### [B. Hardware Configuration Example]

Next, a hardware configuration example of each apparatus included in the information processing system 1 according to the present embodiment will be described.

### (b1: Game Apparatus 100)

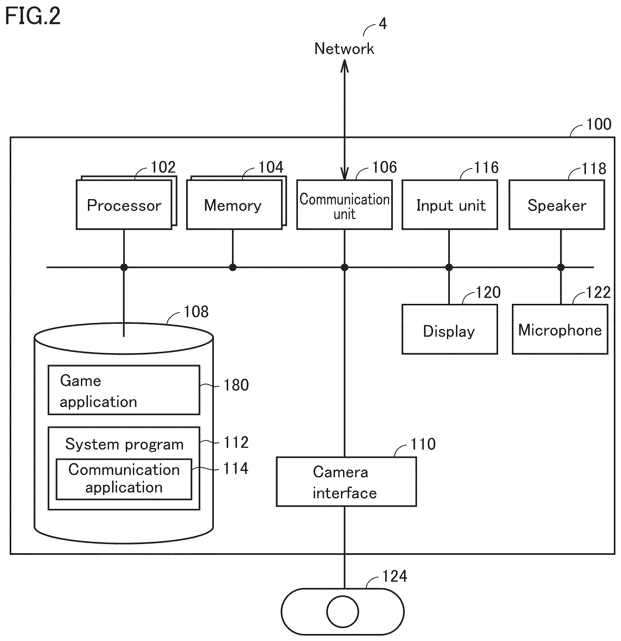

FIG. 2 is a schematic diagram showing a hardware configuration example of the game apparatus 100 according to the present embodiment. The game apparatus 100 is, for example, an information processing apparatus for providing a game to a user. The game apparatus 100 may be an apparatus dedicated to a game, or may be an apparatus capable of executing other than a game. The game apparatus 100 may be, for example, a personal computer, a television, a tablet terminal, a smartphone, a wearable terminal, a server, etc.

Also, each of the game apparatuses 100 constituting the information processing system 1, or each of the game apparatuses 100 participating in any session, may not have the same hardware configuration, and a part or each of them may have a different hardware configuration. The game apparatus 100 may be at least a computer capable of executing a game application. Note that a "computer" in the present specification does not necessarily mean one apparatus, and may refer to a whole in which a plurality of apparatuses are connected by wire or wirelessly.

Referring to FIG. 2, the game apparatus 100 includes, for example, one or a plurality of processors 102, one or a plurality of memories 104, a communication unit 106, a storage 108, a camera interface 110, an input unit 116, a speaker 118, a display 120, and a microphone 122. Each component may be detachable from a main body of the game apparatus 100.

The processor 102 is a processing entity for executing a process in the game apparatus 100. The processor 102 includes, for example, a CPU (Central Processing Unit), a GPU (Graphics Processing Unit), etc. The processor 102 expands a program stored in the storage 108 into the memory 104 and executes the program.

The memory 104 is a volatile storage medium accessible by the processor 102, and includes, for example, a DRAM (Dynamic Random Access Memory), an SRAM (Static Random Access Memory), etc.

The storage 108 is a non-volatile storage medium accessible by the processor 102, and includes, for example, a flash memory, a hard disk, etc. The storage 108 may include, for example, a storage medium attachable to and detachable from the game apparatus 100 such as a cartridge or an optical disk. The storage 108 stores one or a plurality of programs such as a system program 112 and a game application 180, for example.

The system program 112 includes computer-readable instructions for hardware control of the game apparatus 100, provision of a program execution environment, etc. The system program 112 may include one or a plurality of programs or program modules. For example, the system program 112 includes a communication application 114.

The communication application 114 executes a process regarding transmission and reception of the communication data 10 among the plurality of game apparatuses 100 participating in the session.

The game application 180 includes computer-readable instructions for executing a game. A plurality of game applications 180 may be installed in the game apparatus 100. Also, the game application 180 may be read from a separate storage medium. Also, at least a part of game execution by the game application 180 may use another game apparatus 100, or may use an external resource such as a server. Also, the system program 112 may include at least a part of the game application 180.

In the present specification, a term "processor" includes at least a processing circuit executing a process according to computer-readable instructions such as a CPU or a GPU, and a hardwired circuit such as an ASIC (Application Specific Integrated Circuit) or an FPGA (Field Programmable Gate Array). In the present specification, a term "memory" may include at least a flash memory and a DRAM, and may further include another storage medium such as the storage 108.

In the game apparatus 100, a SoC (System on Chip) in which functions of a processor, a memory, etc. are integrated may be adopted. In this case, the processor and the memory exist in the same SoC. Therefore, in the present specification, terms "processor" and "memory" include a mutually independent configuration and a mutually integrated configuration.

The communication unit 106 transmits and receives data to and from another game apparatus 100, the management server 200, etc. via the network 4. The communication unit 106 may perform data communication with another game apparatus 100 etc. via the Internet as an example of the network 4. Also, the network 4 may be a wireless network complying with Bluetooth (registered trademark), ZigBee (registered trademark), a wireless LAN (IEEE 802.11 standard), etc.

The camera interface 110 mediates data transmission to the camera 124 and data reception from the camera 124. The camera interface 110 may be connected to the camera 124 by wire, or may be connected to the camera 124 wirelessly.

The input unit 116 receives a user operation. The input unit 116 includes, for example, a keyboard, a mouse, a game controller, a touch panel, etc. The input unit 116 may be an interface with a device that receives a user operation. Thus, the device that receives a user operation may exist outside the game apparatus 100.

The display 120 displays an image or a video generated by a process by the processor 102. The display 120 includes, for example, an LCD (Liquid Crystal Display), an organic EL display, etc. Note that the display 120 may exist outside the game apparatus 100. In this case, the game apparatus 100 may include an interface circuit with the display 120.

The microphone 122 is arranged in a housing of the game apparatus 100 etc., picks up a sound, and generates a sound signal. The speaker 118 is arranged in the housing of the game apparatus 100 etc., and generates a sound from the sound signal. At least one of the microphone 122 and the speaker 118 may exist outside the game apparatus 100.

The camera 124 generates captured image of an object according to an instruction from the game apparatus 100 or according to a specified condition. The camera 124 includes an image sensor such as a CCD (Charge-Coupled Device) image sensor or a CMOS (Complementary Metal Oxide Semiconductor) image sensor, for example. A lens may be arranged in front of the image sensor.

The camera 124 may be, for example, a camera for a video call. The camera 124 may be a dedicated camera connectable only to a specific device, or may be a general-purpose camera connectable to any device. A plurality of cameras 124 may be connectable to the game apparatus 100. Further, the game apparatus 100 may use a camera of another game apparatus (for example, a smartphone). Thus, a configuration in which the game apparatus 100 uses the camera 124 is not limited.

### (b2: Management Server 200)

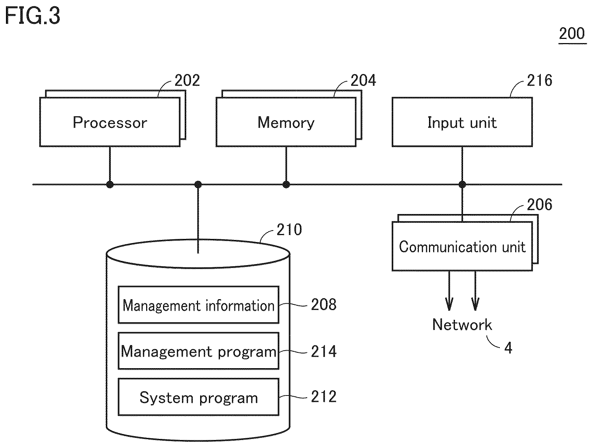

FIG. 3 is a schematic diagram showing a hardware configuration example of the management server 200 according to the present embodiment. Referring to FIG. 3, the management server 200 includes, for example, one or a plurality of processors 202, one or a plurality of memories 204, one or a plurality of communication units 206, a storage 210, and an input unit 216.

The processor 202 is a processing entity for executing a process in the management server 200. The processor 202 includes, for example, a CPU, a GPU, etc. The processor 202 expands a program stored in the storage 210 into the memory 204 and executes the program.

The memory 204 is a volatile storage medium accessible by the processor 202, and includes, for example, a DRAM, an SRAM, etc.

The storage 210 is a non-volatile storage medium accessible by the processor 202, and includes, for example, a hard disk, a flash memory, etc. The storage 210 stores, for example, a system program 212, a management program 214, etc.

The system program 212 includes computer-readable instructions for hardware control of the management server 200, provision of a program execution environment, etc.

The management program 214 includes computer-readable instructions for executing a process related to management handled by the management server 200.

The management information 208 may be stored in the storage 210 or the memory 204. The communication unit 206 transmits and receives data to and from the game apparatus 100, the management server 200, etc. via the network 4. The communication unit 206 may be connected to the network 4 by wire, or may be connected to the network 4 wirelessly.

The input unit 216 receives a user operation. The input unit 216 includes, for example, a keyboard, a mouse, etc.

### [C. Software Configuration Example of Game Apparatus 100]

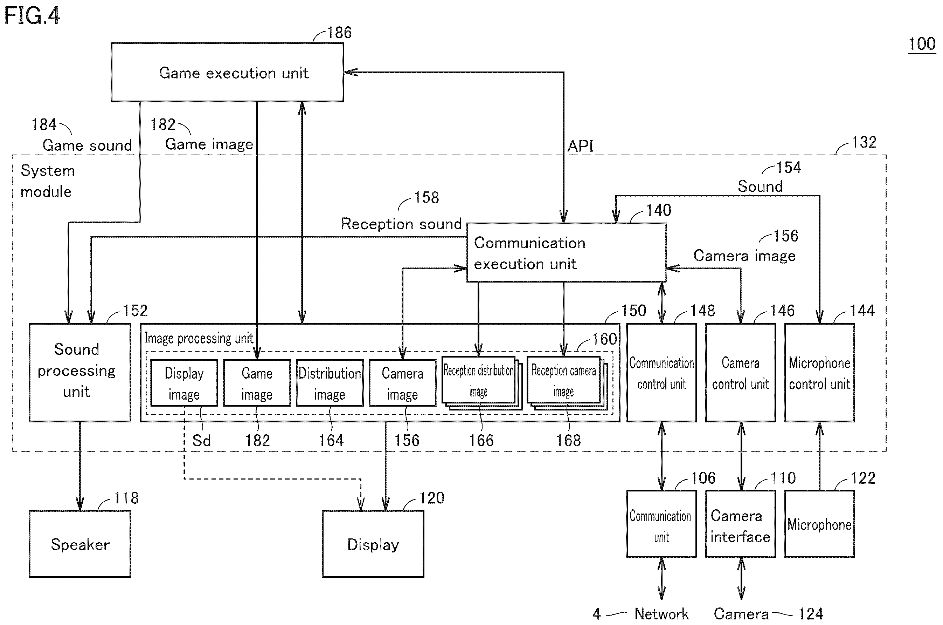

Next, a software configuration example of the game apparatus 100 according to the present embodiment will be described. FIG. 4 is a schematic diagram showing a software configuration example of the game apparatus 100 according to the present embodiment. Referring to FIG. 2, in the game apparatus 100, the system program 112 including the communication application 114 and the game application 180 are simultaneously executable. Note that "simultaneously executable" means that a plurality of applications or programs are executed in parallel, and does not limit execution timings to be the same.

The game apparatus 100 includes a system module 132 and a game execution unit 186 as an example of a software component. The system module 132 may be realized by one or a plurality of processors 102 executing the system program 112. The system module 132 can also be referred to as a system program 112 being executed. The game execution unit 186 may be realized by one or a plurality of processors 102 executing the game application 180. The game execution unit 186 can also be referred to as a game application 180 being executed. Also, a communication execution unit 140 can also be referred to as a communication application 114 being executed.

The game execution unit 186 advances a game based on a user operation, and outputs a game image 182 and a game sound 184. The game image 182 may include, for example, a plurality of types of images having different image qualities, resolutions, frame rates, etc.

The system module 132 provides basic functions necessary in the game apparatus 100. The system module 132 includes, for example, the communication execution unit 140.

The system module 132 may not include at least a part of the communication execution unit 140. At least a part of the communication application 114 may be an application separate from the system program 112, similarly to the game application 180. In the following description, regarding a process executed by the system module 132, a part or all of the process may be executed by the communication execution unit 140. Therefore, in a context of a process executed by the system module 132, the system module 132 can be read as the communication execution unit 140, and the system module 132 can be read as the system module 132 and the communication execution unit 140.

The system module 132 includes, for example, a microphone control unit 144, a communication control unit 148, an image processing unit 150, and a sound processing unit 152.

The microphone control unit 144 generates a sound 154 based on a sound picked up by the microphone 122 etc.

The image processing unit 150 can use a storage area 160 for storing an image. The storage area 160 may use at least a part of an area of one or a plurality of memories 104 or storages 108, for example. The image processing unit 150 may be capable of an image processing for one or a plurality of images.

The storage area 160 may include, for example, an area for storing a display image Sd, the game image 182, one or a plurality of distribution images 164, a camera image 156, one or a plurality of reception distribution images 166, and one or a plurality of reception camera images 168.

The communication execution unit 140 executes a process for exchanging the communication data 10 with another game apparatus 100 in the session. For example, the communication execution unit 140 may execute a process necessary for participating in or leaving a designated session according to a user operation.

The communication execution unit 140 may generate and transmit the communication data 10 based on at least one of the sound 154, the distribution image 164, and the camera image 156 as a process for performing distribution. The distribution image 164 may be generated based on the game image 182. Note that "distribution" may mean, for example, that a certain game apparatus 100 transmits some data directly or indirectly to one or a plurality of other game apparatuses 100. "Distribution" and "transmission" may be read interchangeably.

The communication execution unit 140 may store one or a plurality of reception distribution images 166 and reception camera images 168 etc. included in one or a plurality of communication data 10 from one or a plurality of other game apparatuses in the storage area 160 as a process for receiving a distribution.

The communication execution unit 140 may output a reception sound 158 included in one or a plurality of communication data 10 from one or a plurality of other game apparatuses 100 to the sound processing unit 152 as a process for receiving a distribution. The sound processing unit 152 may generate a sound signal based on the sound 158, and output the generated sound signal to the speaker 118.

The image processing unit 150 may generate the display image Sd by using at least one of the game image 182, the camera image 156, one or a plurality of distribution images 164, one or a plurality of reception distribution images 166, and one or a plurality of reception camera images 168, according to an instruction from the communication execution unit. The display image Sd is used for displaying an image on the display 120 of an own apparatus.

The communication control unit 148 gives an instruction to the communication unit 106 to control data communication with another game apparatus 100, the management server 200, etc. Also, the communication control unit 148 receives the distribution image 164 and the camera image 156 distributed by each game apparatus 100 as the reception distribution image 166 or the reception camera image 168, respectively. In the present specification, "distribution image 164" and "reception distribution image 166" may be read interchangeably. In the present specification, "camera image 156" and "reception camera image 168" may be read interchangeably.

### [D. Display Image Example]

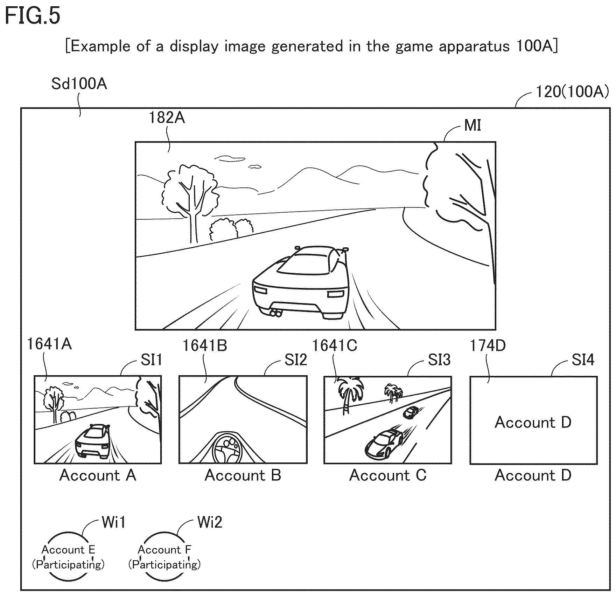

FIG. 5 is a drawing for describing an example of a display image Sd100A generated in the game apparatus 100A according to the present embodiment. The display image Sd100A shown in FIG. 5 is an example, and a screen configuration of the display image Sd generated using the communication data 10 is not limited to this.

In FIG. 5, the display image Sd100A includes a region MI in which a game image 182A of a game application being executed in the game apparatus 100A is displayed. Also, the display image Sd100A includes regions SI1 to SI4. The region MI is larger than each of the regions SI. In the regions SI1 to SI4, a first distribution image 1641 distributed in the session can be respectively displayed. The first distribution image 1641 is a kind of the distribution image 164, and details will be described later. In the present embodiment, four game apparatuses 100 can simultaneously distribute a distribution image in a session. Therefore, the display image Sd100A can include up to four regions SI. That is, one game apparatus 100 is associated with each region SI. In the present embodiment, the game apparatuses 100A to 100D can distribute the distribution image 164, and the game apparatuses 100A to 100D are respectively associated with the regions SI1 to SI4. For example, the game apparatus 100A is associated with the region SI1 in the display image Sd100A, and a first distribution image 1641A based on the game image 182A is displayed. Also, in the present embodiment, the game apparatuses 100A to 100C actually distribute the distribution image 164, and the game apparatus 100D does not distribute the distribution image 164. Therefore, in the display image Sd100A, the first distribution images 1641A to 1641C distributed respectively from the game apparatuses 100A to 100C are displayed in the regions SI1 to SI3. In the region SI4, the first distribution image 1641 is not displayed. In the region SI4, a non-distribution display 174 indicating that distribution is not being performed may be displayed. The non-distribution display 174 may include, for example, information regarding the associated game apparatus 100, or may include a message or an icon indicating that distribution is not being performed. In the present embodiment, a position of each region SI in the display image Sd100A is specified in advance. "Specified in advance" does not mean to be always constant, and includes that any of a position, a number, and a size of each region SI differs according to a number of game apparatuses 100 in the session, a number of distributable game apparatuses 100, and a selectable specified screen layout. Also, without being limited to the non-distribution display 174, a region SI associated with a game apparatus 100 may include information indicating the associated game apparatus 100.

The display image Sd100A includes regions Wi1 and Wi2. Game apparatuses 100E and 100F not associated with any region SI are respectively associated with the regions Wi1 and Wi2. A game apparatus 100 not associated with any region SI is associated with the region Wi. In the regions Wi1 and Wi2, information corresponding to the game apparatuses 100E and 100F respectively, for example, a name or an icon image of an account associated with each game apparatus 100, is displayed.

In a vicinity of each region SI, the camera image 156 distributed by the game apparatus 100 associated with the region SI may be displayed. A vicinity includes superposition. In a vicinity of each region Wi, the camera image 156 does not need to be displayed, or may be displayed. Execution or stop of distribution of the camera image 156 may be arbitrarily switchable by a user similarly to execution or stop of distribution of the distribution image 164.

Note that in other embodiments, a number of the regions SI is not limited, and for example, one or more regions SI may be associated with all game apparatuses 100 participating in the session. Also, a number of the regions SI included in the display image Sd100A may not be limited. Also, while a number of regions SI simultaneously included in the display image Sd100A is limited, by scrolling each region SI, a larger number of regions SI than the number displayed may be substantially displayable. Also, all game apparatuses 100 in the session can arbitrarily select presence or absence of distribution of the distribution image 164, and the game apparatus 100 may be associated with the region SI when distributing, and may be associated with the region Wi when not distributing.

In the present embodiment, the game apparatuses 100B to 100F also generate display images Sd100B to Sd100F including the region MI, the region SI, and the region Wi. In the region MI of each display image Sd100B to 100F, game images 182B to 182F of game applications executed in each game apparatus 100B to 100F are displayed. On the other hand, in any game apparatus 100, the game apparatuses 100A to 100D are associated with the regions SI1 to SI4, and the game apparatuses 100E and 100F are associated with the region Wi. Note that which game apparatus 100 is associated with which region among the regions SI1 to SI4 and the regions Wi1 to Wi2 may differ for each game apparatus 100, or may be the same.

As shown in FIG. 5, a user of the game apparatus 100A can play a game application executed in the game apparatus 100A while viewing a first distribution image 1641 of another game apparatus 100. Therefore, for example, the game image 182 displayed in the region MI may have a higher visibility than the first distribution image 1641 displayed in the display image Sd100. On the other hand, a user may desire to view a distribution image 164 of another game apparatus 100 having better visibility. Therefore, in the present embodiment, a second distribution image 1642 having a higher visibility than the first distribution image 1641 can be displayed in the display image Sd100. Note that in the present embodiment, "visibility" may mean, for example, at least one of a size, a resolution, a frame rate, and a bit rate, and may mean other parameters. Also, that one image has a higher visibility than another image can include, for example, a case where at least one of the parameters exemplified above in one image is higher than that in the another image, and another parameter in the one image is lower than that in the another image.

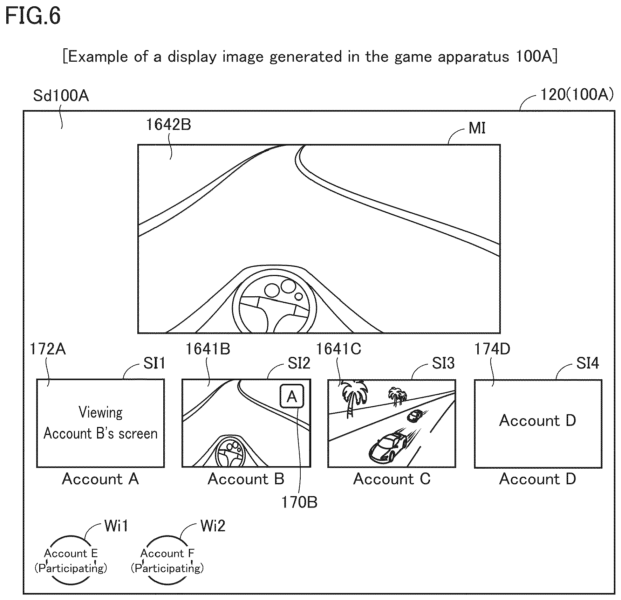

FIG. 6 is a drawing for describing another example of the display image Sd100A generated in the game apparatus 100A according to the present embodiment. A scene shown in FIG. 6 may be a scene before or after the scene shown in FIG. 5, and is different from the scene shown in FIG. 5 in that the game apparatus 100A displays a second distribution image 1642B of the game apparatus 100B.

As shown in FIG. 6, in the region MI of the display image Sd100A of the game apparatus 100A, the second distribution image 1642B is displayed. The second distribution image 1642 is a kind of the distribution image 164, and has a higher visibility than the first distribution image 1641. For example, a user of the game apparatus 100A may see a first distribution image 1641 of the game apparatus 100B displayed in the region SI2, and desire to view a game image of a game application corresponding to the first distribution image 1641 as an image having a higher visibility. At this time, in the present embodiment, as an example, a user of the game apparatus 100A can cause the second distribution image 1642B to be displayed in the region MI by selecting the game apparatus 100B. A visibility of the game image 182 may be higher than a visibility of the second distribution image 1642. Also, the region MI including the second distribution image 1642B may display other information. For example, an image indicating a distribution source of the second distribution image 1642 being displayed in the region MI, or an image guiding a user operation for stopping viewing of the second distribution image 1642 may be displayed.

In the present embodiment, by displaying the second distribution image 1642B in the region MI, the game image 182A of the game application executed in the game apparatus 100A is hidden, but for example, the game image 182A and the second distribution image 1642B may be displayed in different regions respectively. Since the region MI is larger than the region SI, a user of the game apparatus 100A can view the distribution image 164 of the game apparatus 100B with better visibility. Note that, for example, the second distribution image 1642B may also have a higher resolution than the first distribution image 1641B, and a sound of the game application may be reproduced accompanying a display of the second distribution image 1642B.

In the present embodiment, the game apparatus 100 generates and distributes a first distribution image 1641 and a second distribution image 1642 respectively based on the game image 182. A server distributes, for each destination game apparatus 100, a first distribution image 1641, or both a first distribution image 1641 and a second distribution image 1642, received from a source game apparatus 100. For example, when the game apparatus 100B selects a display of a first distribution image 1641A of the game apparatus 100A, and the game apparatus 100C selects a display of the first distribution image 1641A and a second distribution image 1642A of the game apparatus 100A, the server may distribute the first distribution image 1641A to the game apparatus 100B, and distribute the first distribution image 1641A and the second distribution image 1642A to the game apparatus 100C.

The server acquires information indicating which game apparatus 100's second distribution image 1642 is selected for viewing or is being viewed, from each game apparatus 100. The server may generate viewing information 2081 which is information regarding a display state of the distribution image 164 in each game apparatus 100, based on the acquired information. The viewing information 2081 may be included in the management information 208. The server determines, based on the viewing information 2081, for example, to which destination game apparatus 100 a first distribution image 1641 and or a second distribution image 1642 from which source game apparatus is to be distributed. The server distributes, to a certain game apparatus, a first distribution image 1641 and a second distribution image 1642 of another game apparatus based on the viewing information 2081 indicating that the certain game apparatus 100 is requesting viewing of a second distribution image 1642 of the another game apparatus, for example. Note that the viewing information 2081 may include information indicating which game apparatus 100's first distribution image 1641 is being requested for viewing by each game apparatus 100. Also, in the present embodiment, the viewing information 2081 is transmitted to each game apparatus 100.

Note that in other embodiments, the server may distribute only one of a first distribution image 1641 and a second distribution image 1642 for each destination game apparatus 100. The server may distribute both a first distribution image 1641 and a second distribution image 1642 to all game apparatuses 100, and a game apparatus 100 having received them may display either one or both of the distribution images 164. Also, a game apparatus 100 as a distribution source may distribute a first distribution image 1641 when all destination game apparatuses 100 select a display with the first distribution image 1641, while a second distribution image 1642 does not need to be distributed. Also, there may be one type of distribution image 164 distributed from the game apparatus 100, and a destination game apparatus 100 may change a display size of a received distribution image 164, or apply an upscaling or downscaling process to a received distribution image 164. Also, when game apparatuses 100 communicate by P2P with each other, a source game apparatus 100 may distribute a first distribution image 1641 or a second distribution image 1642 to each destination to match a display selection of a destination game apparatus 100.

As shown in FIG. 6, when the game apparatus 100A displays the second distribution image 1642B of the game apparatus 100B, a viewing target information image 172A is displayed in the region SI1 with which the game apparatus 100A is associated. The viewing target information image 172A indicates that the game apparatus 100A is displaying the second distribution image 1642B distributed by the game apparatus 100B. The viewing target information image 172A may include a message, or may include an icon. As will be described later, the viewing target information image 172A is also displayed in a display image Sd of another game apparatus 100. However, a displayed viewing target information image 172A may differ between the game apparatus 100A and another game apparatus 100. A viewing target information image 172 may be generated by the server and transmitted to each game apparatus 100, or may be generated by each game apparatus 100. For example, each game apparatus may receive the viewing information 2081 from the server, and generate a viewing target information image 172 based on the viewing information 2081.

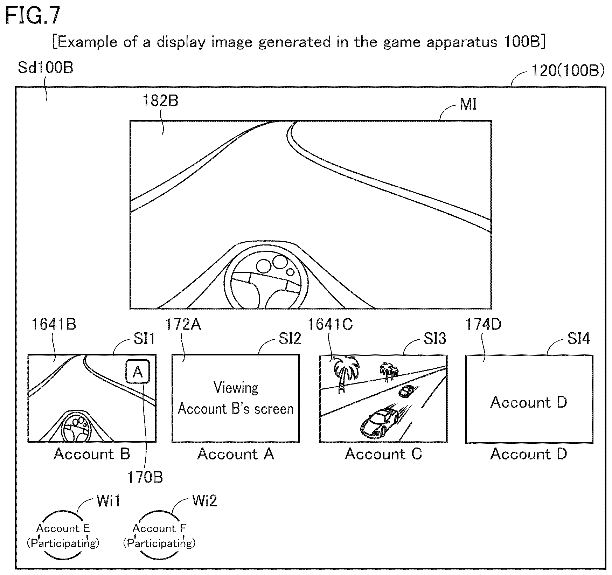

Also, an auxiliary image may be displayed in a vicinity of the region SI1 with which the game apparatus 100A is associated, in addition to or instead of the viewing target information image 172A. The auxiliary image may indicate, for a certain region SI, a direction in which another region SI with which another game apparatus 100 is associated is located, the another game apparatus 100 being a distribution source of a second distribution image 1642 being viewed by a game apparatus 100 corresponding to the certain region SI. The auxiliary image is an icon as an example. The auxiliary image may be an arrow or an icon indicating an eye as an example. In an example shown in FIG. 7, for example, an eye icon as an auxiliary image may be superimposed on the viewing target information image 172A, and the eye icon may be displayed looking to the right so as to indicate a direction in which the region SI2 is included. Since the regions SI2 to SI4 are located to the right of the region SI1, a user cannot know whether the game apparatus 100A is viewing a second distribution image 1642 of the game apparatus 100B or the game apparatus 100C just from the auxiliary image.

Also, a viewing target information image 172 and or an auxiliary image may also be displayed in a vicinity of each region Wi. For example, when the game apparatus 100E associated with Wi1 is viewing a second distribution image 1642 of the game apparatus 100A, a message such as "viewing account A's screen" or an eye icon facing the region SI1 may be displayed in a vicinity of the region Wi1 as a viewing target information image 172. Note that, as an example, an icon as a viewing target information image 172 displayed in a vicinity of Wi1 points in a different direction depending on which second distribution image 1642 of game apparatuses 100 associated with the regions SI1 to SI4 the game apparatus 100E is viewing. Note that, for example, an icon as an auxiliary image may be displayed in a vicinity of the region Wi1, and the icon may point in the same upward direction regardless of which second distribution image 1642 of game apparatuses 100 associated with the regions SI1 to SI4 the game apparatus 100E is viewing.

When the game apparatus 100A displays a second distribution image 1642 of another game apparatus 100, execution of a game application being executed in the game apparatus 100A may be stopped. At this time, the game apparatus 100A may also stop distribution of a distribution image 164 based on the game image 182, or may also stop generation of a distribution image 164. Note that stop of a game application may mean a state in which a game application is not being executed in the foreground, or may mean a state in which a game application is temporarily stopped so that, for example, when the game apparatus 100A ends a display of a second distribution image 1642, the game application is resumed from a point when the display of the second distribution image 1642 was started.

Also, in the present embodiment, when a second distribution image 1642 of a certain game apparatus 100 is being displayed in another game apparatus 100, a viewer information image 170 indicating the another game apparatus 100 is displayed in a vicinity of a first distribution image 1641B of the certain game apparatus 100 displayed in a region SI. The viewer information image 170 may include information indicating a plurality of other game apparatuses 100. The viewer information image 170 may include a message, or may include an icon. For example, as shown in FIG. 6, a viewer information image 170B indicating the game apparatus 100A displaying a second distribution image 1642B of the game apparatus 100B is superimposed on the first distribution image 1641B of the game apparatus 100B. A viewer information image 170 may be generated by the server and transmitted to each game apparatus 100, or may be generated by each game apparatus 100. For example, each game apparatus may receive the viewing information 2081 from the server, and generate a viewer information image 170 based on the viewing information 2081.

Note that in a state shown in FIG. 7, the game apparatuses 100C to 100F do not perform a display of a second distribution image 1642. Therefore, viewer information images 170 displayed in the regions SI1 to SI4 do not include a display regarding the game apparatuses 100C to 100F not displaying a second distribution image 1642. Also, a viewing target information image 172 is not displayed in each region corresponding to the game apparatuses 100C to 100F.

FIG. 7 shows an example of a display image Sd100B generated in the game apparatus 100B when the display image Sd100A shown in FIG. 6 is generated in the game apparatus 100A.

As shown in FIG. 7, in the region MI in the display image Sd100B, a game image 182B of a game application being executed in the game apparatus 100B is displayed.

As shown in FIG. 7, in the region SI1, the game apparatus 100B is associated, and the first distribution image 1641B distributed by the game apparatus 100B is displayed. In the region SI2, the game apparatus 100A is associated, and the viewing target information image 172A indicating a game apparatus 100 that the game apparatus 100A is viewing is displayed. Other regions SI and regions Wi are associated similarly to an association between each region and a game apparatus 100 in the display image Sd100A of the game apparatus 100A. Thus, for example, by associating an own game apparatus 100 with the leftmost region SI, a user operating the game apparatus 100 can easily grasp an image that the user themselves distributes. Note that an association between each region SI and a game apparatus 100 may be the same in all game apparatuses 100.

Since the second distribution image 1642B distributed by the game apparatus 100B is being viewed by the game apparatus 100A, the viewer information image 170B is superimposed on the first distribution image 1641B. In the present embodiment, the viewer information image 170B is superimposed on the first distribution image 1641B, and is not displayed in a vicinity of the game image 182B, for example. In another embodiment, the viewer information image 170B may be displayed in a vicinity of the game image 182B in addition to or instead of a display in a vicinity of the first distribution image 1641B.

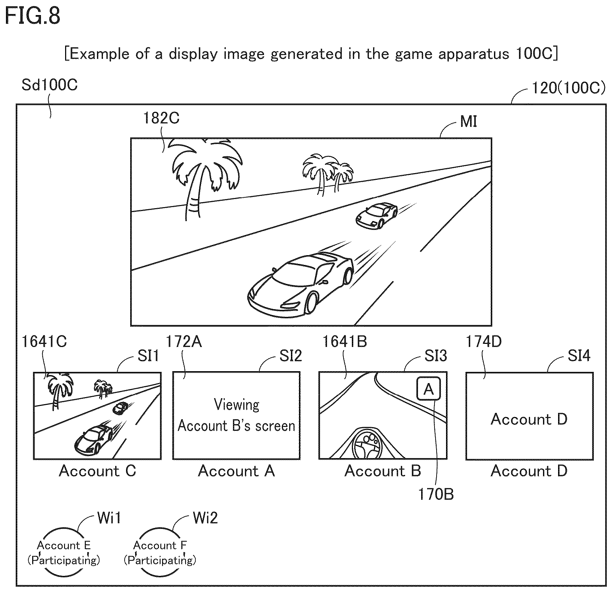

FIG. 8 shows an example of a display image Sd100C generated in the game apparatus 100C when the display image Sd100A shown in FIG. 6 is generated in the game apparatus 100A.

As shown in FIG. 8, in the region SI1, the game apparatus 100C is associated, and the first distribution image 1641C distributed by the game apparatus 100C is displayed. In the region SI2, the game apparatus 100A is associated, and the viewing target information image 172A indicating a game apparatus 100 that the game apparatus 100A is viewing is displayed. In the region SI3, the game apparatus 100B is associated, and the first distribution image 1641B distributed by the game apparatus 100B is displayed. The region SI4 and the regions Wi are associated similarly to an association between each region and a game apparatus 100 in the display image Sd100A of the game apparatus 100A.

A second distribution image 1642C distributed by the game apparatus 100C is not viewed by another game apparatus 100. Also, the game apparatus 100C is not viewing a second distribution image 1642 distributed by another game apparatus 100. On the other hand, in the region SI2, a viewing target information image 172A indicating that the game apparatus 100A is viewing a second distribution image 1642B of the game apparatus 100B is displayed, and also, on a first distribution image 1641B of the game apparatus 100B displayed in the region SI3, a viewer information image 170B indicating that the game apparatus 100A is viewing a second distribution image 1642B of the game apparatus 100B is superimposed.

As shown in FIG. 8, in the present embodiment, information indicating a viewing relationship between another game apparatus 100 participating in the same session and a further other game apparatus 100 is included in an image generated by a certain game apparatus 100 participating in a session. Thereby, a user experience can be improved. For example, online communication in a session may be activated.

Also, in examples shown in FIG. 6 to FIG. 8, information indicating a viewing relationship between all other game apparatuses 100 participating in a session and all other game apparatuses 100 is displayed in an image generated by each game apparatus 100 participating in the session. Thereby, a user experience can be improved.

### [E. Process Example]

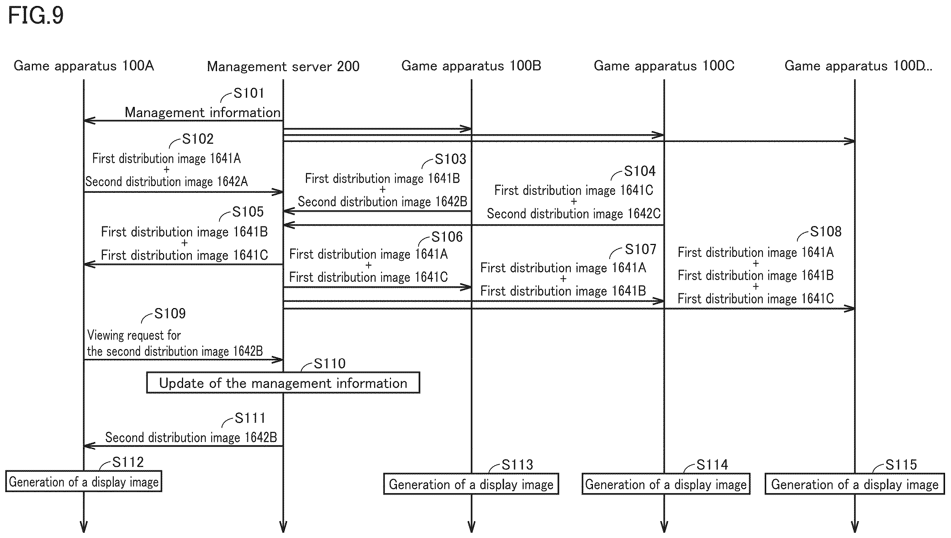

FIG. 9 is a sequence diagram showing a process example according to the present embodiment. A process shown in FIG. 9 is an example, and may include another process, or may not include a part of processes. Also, an execution order of each process is an example, and for example, a plurality of processes may be executed in parallel, or some processes may be executed in a reverse order of the description. For convenience of description, it is divided in units of a step, but these division units are arbitrary, and a plurality of steps may be integrated, or one step may be divided into a plurality. The same applies in the following description.

FIG. 9 shows an example of a process until a display image Sd shown in FIG. 6 to FIG. 8 is generated. FIG. 9 shows processes of the game apparatuses 100A to 100D and the management server 200. As an initial state in an example shown in FIG. 9, the communication application 114 is already executed in the game apparatuses 100A to 100D, and the game apparatus 100A participates in the same session as the game apparatuses 100B to 100D. Also, the game applications 180A to 180C are executed in the game apparatuses 100A to 100C, and the game apparatuses 100A to 100C distribute first distribution images 1641A to 1641C and second distribution images 1642A to 1642C within the same session. Note that the game apparatus 100E and the game apparatus 100F also participate in a session in which the game apparatuses 100A to 100D participate, but the game apparatus 100E and the game apparatus 100F are omitted in FIG. 9. Regarding these game apparatus 100E and game apparatus 100F as well, at least a part of a process performed with the management server 200 is common.

Also, in FIG. 9, the management information 208, a first distribution image 1641, and a second distribution image 1642 included in the communication data 10 are transmitted and received separately, but the management information 208, a first distribution image 1641, and a second distribution image 1642 may be transmitted and received collectively as the communication data 10.

The management server 200 transmits the management information 208 to each game apparatus 100 participating in the same session (step S101). Note that a transmission of the management information 208 to each game apparatus 100 may be simultaneously executed, or may be performed separately. Note that "simultaneously executed" means that a plurality of applications or programs are executed in parallel, and does not limit execution timings to be the same.

Although not shown, in the present embodiment, a transmission of the management information 208 is repeatedly performed to each game apparatus participating in the same session. A transmission of the management information 208 may be performed periodically at a specified time interval, or may be performed when a change in a state occurs in each game apparatus 100 or a server. For example, the transmission may be performed according to an update of the management information (S114). Also, a transmission of the management information 208 may be performed according to a request from each game apparatus 100.

Without being limited to a transmission of the management information 208, each transmission process in this process example may be performed based on a request from a receiving side, may be performed periodically at a specified time interval, or may be performed based on a change in a state of a transmitting side or a receiving side. Also, each of a "specified time interval" used in the present specification may not have the same value. That is, a "specified time interval" used in the present specification is not limited to all of them being the same "specified time interval".

Returning to FIG. 9, the game apparatus 100A transmits the first distribution image 1641A and the second distribution image 1642A generated based on the game image 182A output by the game execution unit 186 to the management server 200 (step S102). Similarly, the game apparatus 100B transmits the first distribution image 1641B and the second distribution image 1642B generated based on the game image 182B to the management server 200 (step S103), and the game apparatus 100C transmits the first distribution image 1641C and the second distribution image 1642C generated based on the game image 182C to the management server 200 (step S104). Note that the game apparatus 100D is not performing a distribution.

Next, the management server 200 transmits the first distribution image 1641B and the first distribution image 1641C, which are first distribution images 1641 transmitted by other game apparatuses 100 participating in the session, to the game apparatus 100A (step S105). Also, the management server 200 similarly transmits each of first distribution images 1641 distributed by other game apparatuses 100 to the game apparatuses 100B to 100D which are other game apparatuses participating in the session (steps S106 to S108).

In the present embodiment, processes of steps S102 to S108 are repeatedly performed. Each of steps S102 to S108 may be periodically performed at a specified time interval, or may be performed when a change in a state occurs regarding each game apparatus 100 or each distribution image 164.

The game apparatus 100A makes a viewing request for the second distribution image 1642B to the management server 200 based on a user operation (step S109). The management server 200 updates the management information 208 according to the viewing request (step S110). In the present embodiment, viewing information 2081 indicating that the second distribution image 1642B of the game apparatus 100B is to be distributed to the game apparatus 100A is generated as the management information 208. Thereafter, the game apparatus 100A receives the second distribution image 1642B transmitted by the management server 200 according to the viewing request (step S111). Step S110 and step S111 may be executed in a reverse order, that is, the management information 208 may be updated after a transmission of the second distribution image 1642B. Also, a process of step S110 may be periodically performed at a specified time interval, or may be performed when a change in a state occurs in the management server 200 or a game apparatus 100 participating in a session.

Next, based on at least the received second distribution image 1642B and the updated management information 208, the game apparatus 100A generates a display image SdA exemplified in FIG. 6 (step S112). Also, based on at least the updated management information 208, the game apparatus 100B generates a display image SdB exemplified in FIG. 7, and the game apparatus 100C generates a display image SdC exemplified in FIG. 8 (steps S113 to S114).
Similarly, based on at least the updated management information 208, the game apparatus 100D generates a display image SdD (step S115). Also, the game apparatus 100E and the game apparatus 100F similarly generate a display image. In the present embodiment, generation of a display image (step S112 to step S115) is repeatedly performed from before a described timing. Each of step S112 to step S115 may be periodically performed at a specified time interval, or may be performed when a change in a state occurs regarding each game apparatus 100 or each distribution image 164.

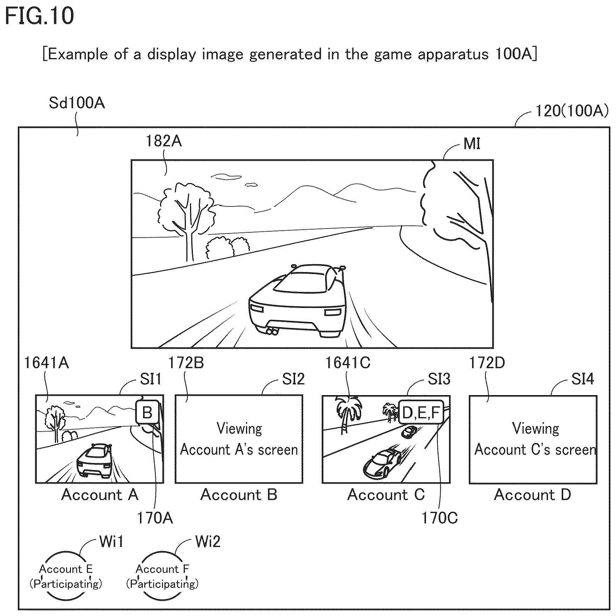

FIG. 10 is a drawing for describing another example of the display image Sd100A generated in the game apparatus 100A according to the present embodiment.

As shown in FIG. 10, in the region MI, a game image 182A of a game application being executed in the game apparatus 100A is displayed.

In the region SI1 with which the game apparatus 100A is associated, the first distribution image 1641A, and a viewer information image 170A superimposed on the first distribution image 1641A are displayed. The viewer information image 170A indicates the game apparatus 100B receiving the second distribution image 1642A distributed by the game apparatus 100A.

In the region SI2 with which the game apparatus 100B is associated, a viewing target information image 172B is displayed. The viewing target information image 172B indicates that the game apparatus 100B is displaying the second distribution image 1642A distributed by the game apparatus 100A.

In the region SI3 with which the game apparatus 100C is associated, the first distribution image 1641C, and a superimposed viewer information image 170C are displayed. The viewer information image 170C indicates the game apparatuses 100D, 100E, 100F viewing the second distribution image 1642C distributed by the game apparatus 100C. Thus, in the present embodiment, when a second distribution image 1642 of a certain game apparatus 100 is displayed by a plurality of other game apparatuses 100, a viewer information image 170 includes information indicating all of those game apparatuses 100. Note that, for example, information indicating the game apparatuses 100D, 100E, and 100F does not need to be constantly displayed at the same time, and for example, an icon indicating being viewed by two or more game apparatuses 100 may be displayed, and by selecting the icon, information for all the viewing game apparatuses 100 may be displayed. Note that in other embodiments, for example, an upper limit may be provided for a number of game apparatuses 100 for which information is displayed. For example, when a number of game apparatuses 100 for which information is displayed exceeds an upper limit, a display indicating that there is a game apparatus 100 for which information is not displayed may be performed.

In the region SI4 with which the game apparatus 100D is associated, a viewing target information image 172D is displayed. The viewing target information image 172D indicates that the game apparatus 100D is displaying the second distribution image 1642C distributed by the game apparatus 100C.

The game apparatus 100E and the game apparatus 100F are viewing the second distribution image 1642C distributed by the game apparatus 100C, but in the present embodiment, in the region Wi1 with which each game apparatus 100E and game apparatus 100F is associated, a display according to each game apparatus 100 displaying a second distribution image 1642 distributed from another game apparatus 100 is not performed. However, in other embodiments, for example, in the region Wi, a viewing target information image 172 may be displayed according to an associated game apparatus 100 displaying a second distribution image 1642 distributed from another game apparatus 100.

### [F. Modified Example]

A display mode of a distribution image 164 of an own game apparatus 100 and a display mode of a distribution image 164 of another game apparatus 100 in the display image Sd may differ. For example, an own first distribution image 1641 may be displayed smaller than another person's first distribution image 1641, or may be displayed with a frame of a different color. Also, an own first distribution image 1641 may not be displayed in the display image Sd.

A position of a region SI where a first distribution image 1641 is displayed is not limited. A plurality of regions SI may be positioned side by side vertically, or may be positioned in a periphery so as to surround a center. Also, a region SI may be movable in position by a user operation.

A second distribution image 1642 may have a good sound quality in addition to or instead of having a better visibility than a first distribution image. That a sound quality is good includes that a volume is large, and also includes a state with a sound compared to a state without a sound.

A region in the display image Sd where a second distribution image 1642 is displayed is not limited to the region M1. For example, it may be displayed in a region SI. When a first distribution image 1641 distributed by a certain game apparatus 100 is displayed in a region SI, a second distribution image 1642 may be displayed in the same region SI based on a user operation. Alternatively, a second distribution image 1642 may be displayed in another region different from the region MI and the region SI. As an example, a second distribution image 1642 may be displayed full screen. A region where a second distribution image 1642 is displayed may have a position and or a size including at least a part of the region MI and or the region SI.

A viewing target information image 172 may be displayed in a region different from a region SI in the display image Sd. For example, a viewing target information image 172 may be displayed in a vicinity of the region MI, or may be displayed at a position that is not in a vicinity of either the region MI or the region SI. Similarly, a display position of a viewer information image 170 is not limited to a vicinity of a first distribution image 1641 in the display image Sd, and may be in a vicinity of the region MI, or may be at a position that is not in a vicinity of either the region MI or the region SI.

In the above example, a viewing target information image 172 is respectively displayed in each region SI with which each game apparatus 100 viewing a second distribution image 1642 of another game apparatus 100 is associated. A viewing target information image 172 may be a list, for example, and may be an image collectively including information indicating a plurality of game apparatuses 100 viewing a second distribution image 1642 of another game apparatus 100. Similarly, a viewer information image 170 is not displayed in each region SI, but may be a list, for example, and may be an image collectively including information indicating which game apparatus 100's second distribution image 1642 is being viewed by which other game apparatus 100.

A viewing target information image 172 and or a viewer information image 170 may be displayed based on a user operation. As an example, a list indicating a viewing target information image 172 and or a viewer information image 170 may be displayed based on a user operation.

A viewing target information image 172 displayed in a vicinity of a certain region SI may be displayed when a display of a first distribution image 1641 displayed in the region SI is stopped by a game apparatus 100 associated with the region SI starting viewing of a second distribution image 1642. For example, when the game apparatus 100 is not distributing a first distribution image 1641 and starts viewing of a second distribution image 1642 of another game apparatus 100, a viewing target information image 172 indicating a viewing destination game apparatus 100 of the game apparatus 100 does not need to be displayed. A user can know a reason why a display of a first distribution image 1641 of a game apparatus 100 is stopped based on that a viewing target information image 172 is displayed.

In the present embodiment, a viewer information image 170 and a viewing target information image 172 were distinguished. Information indicating that a certain game apparatus 100 is viewing another game apparatus 100 can also be information indicating that another game apparatus 100 is being viewed by a certain game apparatus 100. That is, information indicating a viewing source and information indicating a viewing destination do not need to be distinguished in some cases. As an example, a game apparatus 100 may display only either one of a viewer information image 170 and a viewing target information image 172, or may display another image indicating a viewing relationship between game apparatuses 100.

Each process may be provided by cloud computing. For example, generation of a game image 182 and distribution of a distribution image 164 may be performed by a server instead of a game apparatus 100 operated by a user. Note that even in such a case, for example, since distribution is based on a user operation to a game apparatus 100, it may be said that "a game apparatus 100 distributes a distribution image 164". The same applies to execution of a game application or a chat application.

Embodiments disclosed this time should be considered as illustrative in all respects and not restrictive. A scope of the present invention is shown not by the above description but by claims, and is intended to include all modifications within a meaning and a scope equivalent to the claims.

## Claims

1. An information processing apparatus (100) comprising at least one processor (102), the at least one processor configured to:
join a session in which a plurality of distribution images based on an image of a running game application are capable of being distributed;
cause a display (120) to display a session image comprising at least one of the plurality of the distribution images distributed in the session, wherein one or more of the distribution images included in the session image are respectively displayed in a first state, a second state, or both; and
cause the display to display a first image comprising at least an image indicating a further information processing apparatus displaying, in the second state, at least one distribution image distributed by another information processing apparatus participating in the session.

2. The information processing apparatus (100) according to claim 1, wherein:
the first image is one or more images respectively displayed in a vicinity of any of the one or more distribution images included in the session image; and
the first image indicates the further information processing apparatus displaying the distribution image in the vicinity of the first image in the second state.

3. The information processing apparatus (100) according to claim 1 or 2, wherein:
the session image comprises one or more second images respectively generated at predetermined positions;
each of the second images is associated with an information processing apparatus participating in the session; and
each of the second images comprises an image indicating another information processing apparatus distributing the distribution image, at least when the associated information processing apparatus is displaying any of the distribution images in the second state.

4. The information processing apparatus (100) according to claim 3, wherein the second image comprises the distribution image when the associated other information processing apparatus is distributing the distribution image in the session.

5. The information processing apparatus (100) according to claim 1 or 2, wherein the second state is a state in which visibility of the distribution image is higher than in the first state.

6. The information processing apparatus (100) according to claim 5, wherein the state in which the visibility is higher comprises at least one of: a state of being displayed larger, a state of having a higher resolution, a state of having a higher frame rate, and a state of having a higher bit rate, than in the first state.

7. The information processing apparatus (100) according to claim 1 or 2, wherein the second state is a state in which sound quality of sound accompanying reproduction of the distribution image is higher than in the first state.

8. The information processing apparatus (100) according to claim 1 or 2, wherein the number of the distribution images displayed in the second state and included in the session image is zero or one.

9. The information processing apparatus (100) according to claim 1 or 2, wherein the session image comprises all of the distribution images distributed in the session.

10. The information processing apparatus (100) according to claim 1, 2, or 9, wherein the first image comprises at least an image indicating all information processing apparatuses participating in the session that are displaying at least any of the distribution images in the second state.

11. A computer-implemented method comprising:
joining a session in which a plurality of distribution images based on an image of a running game application are capable of being distributed;
displaying a session image comprising at least one of the plurality of distribution images which are distributed in the session and are displayed in a first state, a second state, or both; and
displaying a first image comprising at least an image indicating a further information processing apparatus displaying, in the second state, at least one of the distribution images distributed by another information processing apparatus participating in the session.

12. A computer program comprising instructions which, when the program is executed by a computer, cause the computer to carry out the method of claim 11.
